# EUROPEAN PATENT APPLICATION

(11) **EP 4 254 608 A1**
(43) Date of publication of application: **04.10.2023**
(21) Application number: 22166389.1
(22) Date of filing: 01.04.2022
(51) Int. Cl.: H01M 10/625, H01M 10/653, H01M 10/6555, H01M 10/6553, H01M 50/543, H01M 50/105, H01M 10/6572, B29C 64/10, H01M 10/6567, H01M 10/6556, H01M 10/654

(54) **BATTERY SYSTEM FOR USE IN AN ELECTRIC VEHICLE**

(71) Applicant: Volvo Car Corporation, 40531 Göteborg (SE)
(72) Inventor: Orbay, Raik Celal, 47540 Heinövallen 1 (SE)
(74) Representative: Nederlandsch Octrooibureau

(57) **Abstract**

A battery system (2) for use in an Electric Vehicle (1), EV, is provided. The battery system (2) comprises a battery cell (20, 30, 40), a conductor (14, 15, 28; 35a, 35b) comprising graphene, and a cooling member (16), wherein the battery cell is in thermally conductive connection to the cooling member (16) via the conductor (14, 15, 28; 35a, 35b). The disclosure further relates to a battery cell for use in the battery system and to a vehicle (1) comprising the battery system.

## Description

### Technical field

The disclosure relates to a battery system for use in an electric vehicle, a battery cell suitable for use in battery system and a vehicle comprising such a battery system.

### Background art

High-performance batteries, in particular batteries used to power electric motors of electric vehicles (BEVs) or hybrid electric vehicle (HEVs), must be thermally conditioned to obtain a good performance and to lengthen their service life. Internal loss processes in the batteries lead to heat generation, which heat must be dissipated to avoid damage to the battery cells. For example, most conventional lithium battery cells will degrade when their temperature rises above 45 degrees. Cooling systems are therefore put in place to keep the batter cells in a temperature range below 45 degrees. Moreover, for optimal functioning of the battery, the temperature distribution within the battery should be uniform, for example varying by no more than 2 degrees Celsius throughout the cells within the battery volume.

Known batteries comprise a plurality of individual battery cells and may contain more than 100 cells. The battery cells are thermally connected or bridged to a cooling body by conductive elements made of thermally conductive materials that are arranged between the battery cells and contact an exterior surface of the battery cells, and/or the terminals or tabs. Nevertheless, the heat dissipation is not optimal, and over time batteries deteriorate as a consequence of the frequent exposure to high temperatures.

It is an object to provide a battery system for an electric vehicle with improved heat management.

### Summary

According to the present disclosure, a battery system for use in an electric vehicle comprises a battery cell, a conductor comprising graphene, and a cooling unit, the battery cell being in thermally conductive connection with the cooling unit via the conductor.

The term electric vehicle is used for all types of vehicles that use electric power, including but not limited to battery electric vehicles (BEV), hybrid electric vehicles (HEV), and plug-in hybrid electric vehicles (PHEV). Such vehicles are typically equipped with powerful batteries, comprising a plurality of battery cells. For example, the system may comprise at least 100 battery cells. The batteries and/or battery cells that can be used include but are not limited to cylindrical cells, prismatic cells, and pouch-type cells.

Graphene is a two-dimensional (2D) material, formed of a lattice of hexagonally arranged carbon atoms. Here we use the term "graphene layer" to refer to a single layer of graphene, whereas we use the term graphene to refer to any form of graphene, such as a plurality of graphene layers bundled together, or a bundle of graphene nanoribbons or graphene nanotubes.

Advantageously, graphene has a very high in-plane thermal conductivity coefficient, for example in embodiments the thermal conductivity can be at least 2000 W/mK, at least 3000 W/mK, or at least 5000 W/mK. Here the term "in-plane" is used to indicate the thermal conductivity coefficient within a single graphene layer. The cross-plane thermal conductivity coefficient is allowed to be significantly lower since for good heat dissipation only a high thermal conductivity in two directions is required.

The conductor may be formed by a plurality of graphene layers bundled together, the plurality of layers being provided substantially parallel to each other.

It will be understood that the specific configuration of the plurality of layers with respect to each other affects the thermal conductivity coefficient in a manufactured 3D structure. Preferably, the graphene layers are substantially parallel to each other to make optimal use of the high in-plane thermal conductivity. The single layers may each be oriented in a single plane yet in embodiments may also be bent to form a curved heat path. During manufacture, the graphene is typically flexible enough to be bent in any desired configuration.

The graphene layers may be constructed as a mesh. The conductor for instance comprises narrow ribbons of graphene to form the open mesh, enabling unconstrained flow of the electrolyte. Specifically, when the graphene is arranged within a battery cell, the graphene should not prohibit the normal functioning of the battery such as the flow of electrolyte within the battery cell.

Further advantageous to the use of graphene is that it is strong enough to be used as a single material and does not require mixing with other materials to provide a support structure. This is not self-evident for other materials. For example, graphite, which is also used as a conductor in batteries, is typically mixed into another material such as a plastic foil material comprising graphite particles. Using plastic as a binder will decrease the thermal conductivity significantly and thereby significantly reduces the ability of the material for heat removal.

The combination of high strength and high thermal conductivity enables a compact construction of a conductor made of graphene. This reduces weight and size of the conductor and facilitates a compact overall battery system to be placed in a vehicle. Specifically, the conductor does not add little height to the battery system, allowing the battery system to be accommodated in the floor of a vehicle. In a passenger vehicle, the battery can be arranged below the passenger cabin. In addition to being compact, graphene is also light weight. Graphene has a density around 1.1 g/cm³, which is significantly lower than the density of other materials that used for heat conductors, such as copper and aluminum. Consequently, the overall weight of the battery system may be reduced.

In an embodiment, the conductor is in electrically conductive connection with the battery cell.

Advantageous to the use of graphene as a thermal conductor is that the conductor may also be used as current collector. The electrical conductivity of a pristine, single layer graphene can be 70% higher than that of for instance copper. Combining the functions of transporting heat and the current generated in the battery cell enables a more compact design of the battery system, which is advantageous for the installation of the battery system in an electric vehicle.

A battery system may have the conductor arranged at or near a hotspot of the battery cell, the hotspot being formed during charging and/or discharging of the battery cell.

Each battery cell in the battery system has a hotspot, which in this context is defined as the point or region of the battery cell where most generated heat accumulates when the battery is used without any enhanced cooling at room temperature. Providing a conductor to extend in the location of the hotspot or to extend to a proximity of the hotspot inside the housing of the battery cell, enables efficient heat dissipation. Here the term "near" is to be interpreted in relation to the dimensions of the battery. For example, a battery that has a certain dimension d will have a conductor arranged at a maximum distance of 0.2*d. The conductor may pass through the hotspot. By guiding the conductor to or near to the hotspot, the uniformity of the temperature within the battery is improved, resulting in reduced deterioration of the battery.

The position of the generated hotspot is dependent on the type of the battery. In some types of battery, the hotspot is formed near the center of the battery, for instance close to the geometric center of the battery. In other types of battery, the hotspot is formed near tabs of the battery.

The battery cell may have a housing, the conductor extending within a space enclosed by the housing.

Batteries are typically provided with an electrically insulated housing. Consequently, heat dissipation through the housing can be highly inefficient and heat can build up in the battery internally. Dependent on the position of the hotspot, it may be advantageous to have the graphene conductor extend within the housing, preferably within the housing of the battery cell. In an embodiment, the conductor extends between any two of the following: a separator, a positive electron collector, or a negative electron collector.

This configuration is particularly suited for cylindrical battery cells that have a hotspot within the cylindrical body of the battery cell. Nevertheless, the graphene layer may also be provided between the positive electron collectors, negative electron collectors, and or separators of other type of battery cells such as prismatic battery cells or lithium pouch battery cells. Plastic material may be applied where an electrically non-conducting design is needed.

Alternatively, or in addition, the battery cells may comprise terminals that are in thermally conductive connection with the cooling unit via the conductor.

Specifically in pouch-type batteries, the hot spot of the battery develops near one or both of the battery terminals so that placing the graphene conductor in a thermal connection with the terminal, places it in vicinity of the hotspot and leads to efficient cooling. The connection between the terminals and/or tabs may be a direct connection, or a thermal interface material (TIM) may be provided between the terminal and/or tab and the conductor comprising graphene.

The battery system may further comprise s a thermal interface material, TIM, preferably wherein the TIM is made of graphene. Alternatively, the TIM could for instance be made of silver. Advantages of graphene as TIM are its very high ability to dissipate heat and its very low surface roughness to limit contact thermal resistance. In embodiments, the battery terminals or tabs may also be directly connected to the conductor comprising graphene. Here the term "directly connected" is used to indicate that there is no material provided between the terminals and tabs. The graphene can be used instead of a Thermal Interface Material (TIM) as it has a very low contact thermal resistance. For example, in the contact the thermal resistance may be between 10 and 20 Kmm²/W at a pressure between 100 and 400 KPa.

The battery cell may be a Pouch-type battery cell. Pouch-type cells are efficient in the use of space and are therefore typically more compact than other types of battery cells, such as cylindrical or prismatic cells. So-called tab cooling has been shown to be most efficient for this type of battery, and results in the least degradation of the battery over time. Graphene is very suitable for tab cooling

The cooling unit may comprise a coolant.

Preferably, a liquid coolant (e.g., water) is used as it is more effective than cooling based on air or another gas. The coolant may flow through Galvanically insulated channels in a cooling plate of the battery system and cool via convection. Phase change may also facilitate the heat transfer, e.g., liquid coolant evaporates during the heat transfer process. A cooling plate is typically arranged above or below the battery cells, yet it will be understood that dependent on the configuration of the vehicle it may also be provided elsewhere.

The cooling unit may comprise a non-electrically conductive element, preferably a Peltier element. Advantageously, Peltier elements comprise only non-conducting materials. Accordingly, there is no need for Galvanic insulation.

The conductor may be manufactured using an additive manufacturing method. Such a conductor can easily be tailored according to the desired design or shape of a particular battery. Typically, battery cells are ordered from an external supplier and the battery system is assembled later. The additive manufacturing method enables the design of a graphene conductor that precisely fits between the battery cells and the cooling unit. In-house produced battery cells are also possible to be matched seamlessly with heat receiving surfaces made o graphene, manufactured via 3D-printing.

The battery system may have a capacity of at least 50kWh. This enables use of the battery system in a BEV, in particular a passenger car.

According to a further aspect of the disclosure and in accordance with the advantages described herein above, there is provided a battery cell for use in a battery system according to the disclosure. It will be understood that whereas some battery cells may be conventional battery cells, they may be combined with battery cells that are specifically configured to be applied in a battery system according to the disclosure.

According to yet another aspect of the disclosure, there is provided a vehicle comprising a battery system. The vehicle may for example be a truck, bus, industrial vehicle, motorcycle recreational vehicle, or any other type of ground vehicle. In addition, the vehicle may be any type of watercraft, aircraft, or spacecraft that may benefit from the use of electric power for all or a portion of its propulsion power. Although it is in some situations preferred to arrange the battery below the chassis floor of the vehicle, it will be understood that the position of the battery may differ and may for instance be selected based on the available space within the vehicle, the desired weight balance, or the location of other components within the vehicle.

### Brief description of the drawings

The present disclosure will, by way of non-limiting example, be discussed in more detail below, with reference to the attached drawings, in which:
Fig. 1 schematically shows a side view of a battery electric vehicle,
Fig. 2 schematically shows a battery system comprising a conductor plate comprising graphene,
Fig. 3 shows a battery cell suitable for use in a battery system as shown in Fig. 2,
Fig. 4 shows the temperature distribution during charge and recharge of the battery cell of Fig. 3,
Fig. 5 shows a lithium pouch battery cell connected to a conductor comprising graphene,
Fig. 6 shows of a prismatic battery cell connected to a cooling unit via a conductor comprising graphene,
Fig. 7 shows an embodiment of a cylindrical battery cell and its temperature distribution during charging or discharging operation, and
Fig. 8 shows a detail of the body of the cylindrical battery of Fig. 7.

### Detailed Description

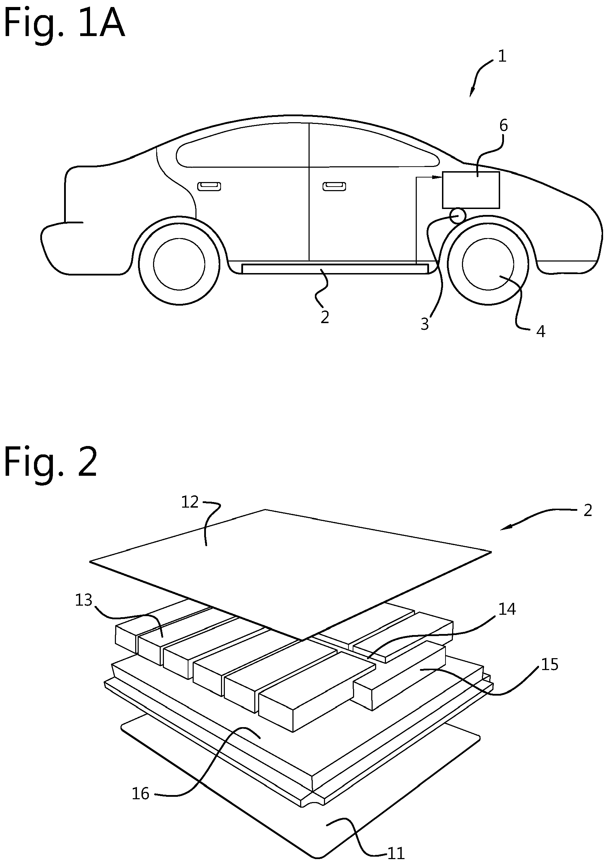

Fig. 1A schematically shows a first embodiment of a battery electric vehicle (BEV) 1 comprising a battery system 2. The vehicle 1 is a fully Electric Vehicle and is provided with an electromotor 3 for driving rotation of the wheels 4. An electronic control unit (ECU) 5 is configured for controlling an amount of power that is provided from the battery system 2 to the electromotor 3. The battery system 2 is situated at a bottom side of the vehicle and is mounted onto a chassis floor 6. The low position of the battery system 1 provides a stale and comfortable driving conditions. The battery system 2 according to the disclosure is compact and takes up relatively little passenger space.

Fig. 2 shows a schematic view of the various components of the battery system 2, according to a first embodiment. The battery system 2 comprises a bottom cover 11, an insulation layer 12, a plurality of battery cell modules 13, a conductor 14 comprising a thermal interface material (TIM), and a conductor plate 15 comprising graphene. The conductor 14 promotes heat flow and ensures a good connection between the battery cell modules 13 and the conductor plate 15. The conductor 14 ensures that the conductor plate 15 can spread the heat efficiently. The conductor plate 15 is connected to the cooling member 16 that further cools the battery. The battery cell modules 13 are thus thermally connected to the cooling member 16 through the conductor 14 and the conductor plate 15 comprising graphene. The TIM may for instance comprise silver.

It is envisaged that the conductor 14 comprises graphene, extending along the battery modules 13, and being in heat conducting contact with the individual battery cells in the modules 13.

In the depicted embodiment, the cooling member 16 is provided at a bottom side of the battery cell modules 13. It will be understood that the position of the cooling member 16 may depend on the specific battery system 2. The cooling member 16 may be provided as a plate below or above the battery. Modules 13 The cooling member 16 may for instance be a Peltier element or any other type of heat sink such as a Galvanically insulated coolant path. The cooling member may be arranged nested in the conductor plate 15 or may be provided separately on top, below, or on a side of the conductor plate 15.

The battery cell modules 13 each include one or more battery cells (e.g., lithium-ion electrochemical cells). The battery cells are each connected to the cooling member 16. The most efficient way of connecting the battery cell modules 13 to the cooling member 16 is dependent on the type of battery cell in the modules 13. Figs. 2-7 describe exemplary embodiments of different types of battery cells that can be used in the battery system 2.

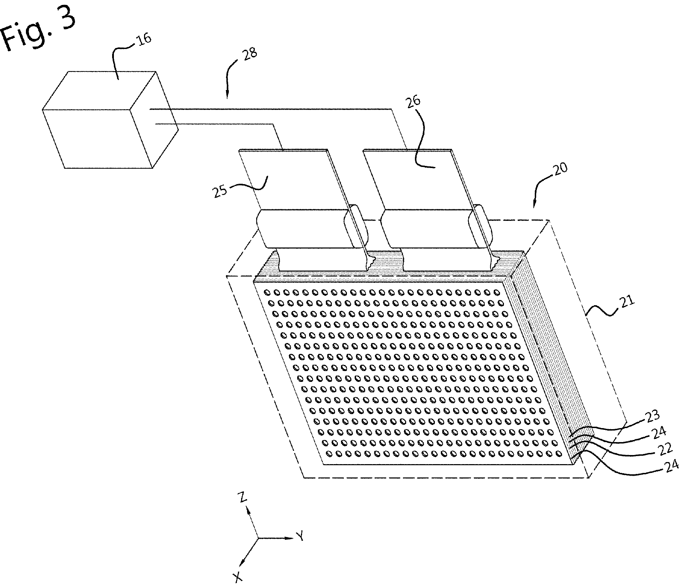

Fig. 3 shows a lithium pouch battery cell 20. This battery cell 20 is part of the battery cell modules 13 in the battery system 2. The battery cell 20 has a pouch 21, a plurality of copper electron collectors 22, a plurality of aluminum electron collectors 23, a plurality of separators 24 made of a polymeric material, a positively charged battery cell tab 25, and a negatively charged battery cell tab 26. The battery tabs 25, 26 are in heat conducting contact with the cooling unit via the conductor 28 comprising graphene.

The electron collectors 22, 23 and separators 24 are alternatingly stacked. The copper electron collectors 22 are welded to the positive battery tab 25 that extends from a top side of the battery cell 20, whereas the aluminum electron collectors 23 are welded to a negative battery tab 26. The collectors 22, 23 are sealed within the pouch 21 (schematically indicated). The pouch 21 is filled with an electrolyte. The electron collectors 22, 23 are substantially flat and parallel to each other and spaced apart along the longitudinal axis X. Each collector 22, 23 and separator 24 defines a plane extending along a transverse axis Y and the vertical axis Z. The vertical direction Z coincides with the direction of maximum heat flow within the battery cell 20.

Due to the good thermal conductivity in the vertical direction Z, the heat generated within the battery cell 20 is effectively transported towards the battery tabs 25, 26. A hot spot is typically formed close to the battery tabs 25, 26. Connecting the battery tabs 35,36 to the cooling unit therefore provides an effective way of cooling the battery cell 10.

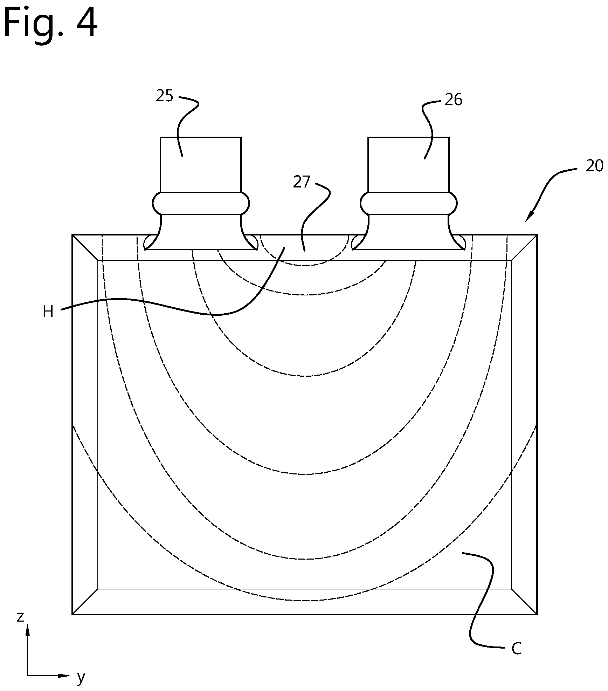

Fig. 4 shows the heat distribution in the battery cell 20. In the region of the hotspot 27, the battery cell 10 reaches the highest temperatures during use and is situated near the battery tabs 25, 26. The heat distribution in the battery cell 20 is schematically indicated using dashed lines 25 to indicate regions of equal temperature, the lines indicated by C being coldest and the lines indicated at H being hottest.

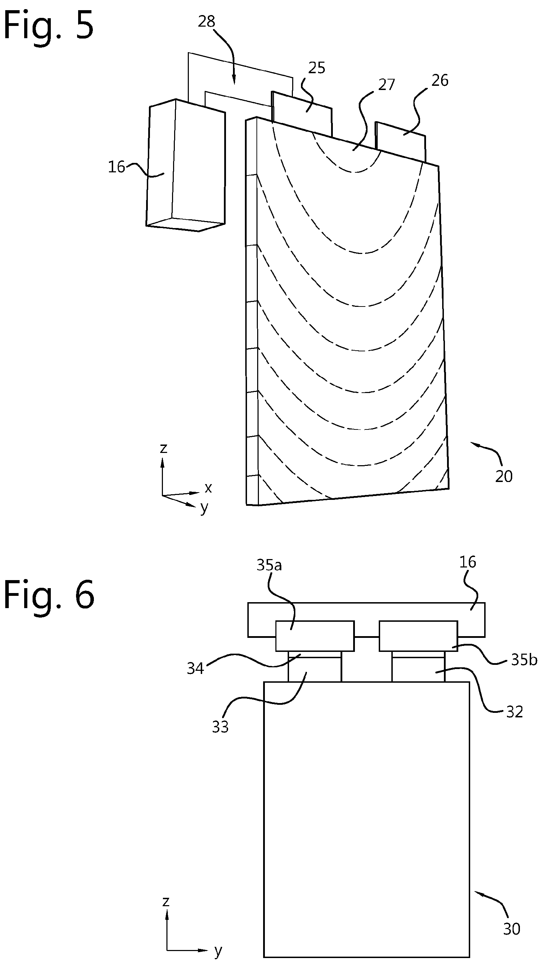

Fig. 5 shows a perspective view of the lithium pouch battery cells 20 connected to a conductor 28 comprising graphene and a cooling member 16. The battery cells 20 are thermally connected to the cooling member 16 via the strip-shaped conductor 28.

The graphene in the conductor 15 has a thermal in-plane conductivity of 5000 W/mK. In order to provide an efficient heat path between the tabs 25, 26 of the battery cell 20 at a top side of the battery cell and the cooling member 16, the graphene conductor is bent around the exterior of the battery cell. A heat path is formed by a plurality of graphene layers extending substantially parallel to each other and bent with a mild curvature to still enable the high thermal in-plane conductivity of 5000 W/mK through each single graphene layer.

In alternative embodiments, the graphene sheets may also partially extend into the pouch of the battery cell 20. For example, the graphene sheets may extend in the area of the hotspot 27 to create an efficient heat path for removal of heat from the battery cell.

As an alternative for lithium pouch type batteries, prismatic battery cells 30 may be used in the battery system. The heat distribution in the prismatic battery cell 30 is similar to that of the pouch type battery cell 20 and has a hotspot which, like for a lithium pouch battery cell, is formed near terminals 32, 33 of the prismatic cell 30. The battery cell 30 has as an intrinsic property that the thermal conductivity along the height of the battery cell, e.g., along the vertical axis z, is significantly better than in the other directions. Consequently, in the prismatic battery cells 30, the hotspot 224 is located closest to the edges of the cell 210, near the positive and negative terminals 32, 33.

Fig. 6 schematically shows connection of the prismatic battery cell 30 to the cooling member 16 via conductors 35a, 35b, each conductor comprising graphene and thermal interface material 34. Each terminal 32, 33 is connected to the cooling member16 through a separate conductor path to avoid occurrence of a short circuit through the graphene. The graphene conductors 35a, 36b are connected to the respective terminals 33, 32 though the TIM. In this embodiment, electric connectors for power and signals, may be connected directly to the terminals 32, 33, or to the graphene conductor 35a,35b. The electric connectors may comprise copper wires attached to the terminals 32, 33 or to the graphene conductor 35a, 35b. Alternatively, the electric connectors can be comprised graphene, which has a high electric conductivity.

The battery cell modules 13 may have a height between 10 and 20 cm, generally approximately 15 cm. In conventional battery systems 2, the cooling member 16 is provided as a separate plate on top of the conductor 15. Atypical height for the cooling plate is about 15 mm, and a height of the thermal interface material (TIM) is about 0.4 mm. By using the graphene conductor 15, the combined height of the cooling plate and TIM can be reduced to 12 mm.

The cooling member16 shown in Fig. 6 is a Peltier element connected at a top side of the battery cell 30. It will be understood, however, that this is exemplary and both the type of cooling unit 16 as well as its position relative to the battery cell 30 may vary in different embodiments.

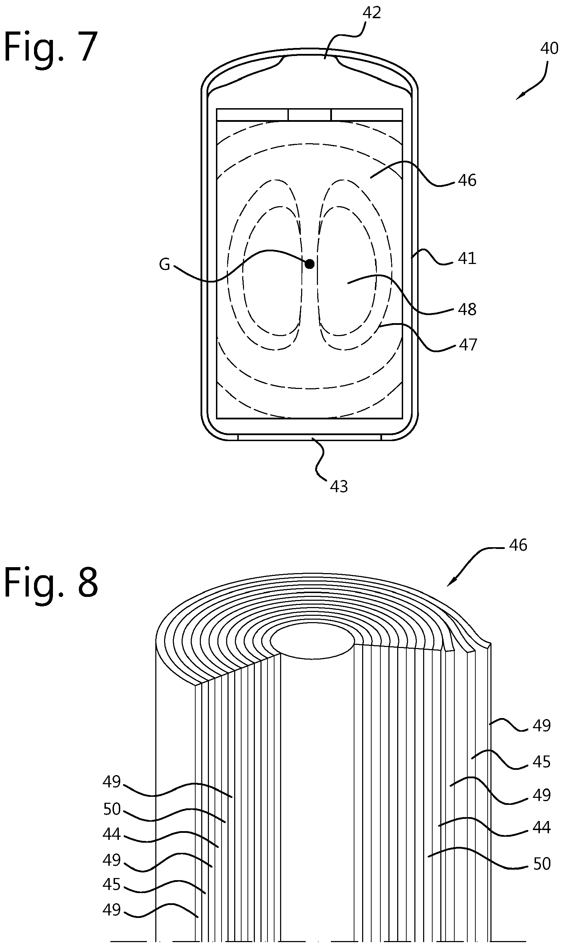

According to yet another embodiment, a battery system comprising cylindrical battery cells is provided. Fig. 7 shows a schematic view of a cylindrical battery cell 40. The cylindrical battery cell has 40 has a housing 41, positive terminal 42, negative terminal 43, and electron collectors 44, 45. In a cylindrical body 46 of the battery cell 40, the heat distribution is schematically indicated using dashed lines 47 to indicate zones of equal temperature. A hotspot 48 is formed within the housing 41 of the battery cell 40, in vicinity of the geometric center G of the battery cell body 46.

Fig. 7 shows a detail of the body 46 of the cylindrical battery cell 40 of Fig.6. The body 46 of the cylindrical battery cell 40 comprises positive electron collectors 44 and negative electron collectors 45, separated by a separator 49. In addition, the body 46 comprises a graphene layer 50, arranged between the positive electron collectors 44 and separators 49. The graphene layer 50 is rolled and pressed together with the electron collectors 44, 45 and separator 49 to form the cylindrical body 46 of the battery cell 40. A plurality of graphene layers 50 may be integrated within the battery cell 40 in this way, to provide an efficient heat transfer out of the battery cell body 46 from a plurality of positions close to the battery cell's hotspot 48.

Advantageous to graphene is that it is flexible and can be bent easily during manufacture. Preferably, the graphene layer 50 comprises an open mesh to enable the free flow of electrolyte through the battery cell 40. The graphene layer 50 may extend all the way through the cylindrical body 46 in a vertical direction, to a top side of the battery cell adjacent to the positive terminal 42. At the positive terminal 42, the battery cell 40 can be connected to a graphene conductor or another type of conductor to transport heat away from the battery cell and towards a cooling unit. This cooling unit may for instance be coolant based as discussed in relation to the first embodiment or based on a Peltier element as discussed in relation to the second embodiment. It will be understood by the skilled person that the type of cooling unit can be selected independently of the type of battery cell.

In a further embodiment, the graphene layer 50 may be partially encapsulated in a plastic material to enable a Galvanic insulation. The graphene layer 50 is not insulated near the hot spot 48 and may effectively carry heat all the way out of the battery cell 40 without releasing heat within the battery cell body 46.

## Claims

1. A battery system (2) for use in an electric vehicle (1), the battery system (2) comprising a battery cell (20, 30, 40), a conductor (14, 15, 28; 35a, 35b) comprising graphene, and a cooling unit (16), the battery cell (20, 30, 40) being in thermally conductive connection with the cooling unit (16) via the conductor (14, 15, 28; 35a, 35b).

2. The battery system (2) according to claim 1, the conductor (14, 15, 28; 35a, 35b) being formed by a plurality of graphene layers bundled together, the plurality of layers being provided substantially parallel to each other.

3. The battery system (2) according to claim 1 or 2, the conductor (14, 15, 28; 35a, 35b) being in electrically conductive connection with the battery cell (20, 30, 40).

4. The battery system (2) according to any of the preceding claims, the conductor (14, 15, 28; 35a, 35b) being arranged at or near a hotspot (27, 48) of the battery cell (20; 30; 40), the hotspot (27, 48) being formed during charging and/or discharging of the battery cell (20, 30, 40).

5. The battery system (2) according to any of the preceding claims, the battery cell (40) having a housing (41), the conductor (35a, 35b) extending within a space enclosed by the housing.

6. The battery system (2) according to claim 5, the conductor (35a, 35b) extending between any two of the following: a separator (49), a positive electron collector (44), or a negative electron collector (45).

7. The battery system (2) according to any of the preceding claims, the battery cell (20, 30, 40) comprising terminals (25, 26; 32, 33; 42, 43) that are in thermally conductive connection with the cooling unit (16) via the conductor (14, 15, 28; 35a, 35b).

8. The battery system (2) according to claim 7, the battery terminals (25, 26; 32, 33; 42, 43) being directly connected to the conductor (14, 15, 28; 35a, 35b) or via a thermal interface material (14, 34) comprising graphene.

9. The battery system (2) according to any of the preceding claims, the battery cell (20) being a pouch type battery cell.

10. The battery system (2) according to any of the preceding claims, the cooling unit (16) comprising a coolant.

11. The battery system (2) according to any of the preceding claims, the cooling unit (16) comprising a non-electrically conductive element, preferably a Peltier element.

12. The battery system (2) according to any of the preceding claims, the conductor (14, 15, 28; 35a, 35b) being formed by additive manufacturing.

13. The battery system (2) to any of the preceding claims, the battery system having a capacity of at least 50kWh.

14. A battery cell (20, 30, 40) for use in a battery system according to any of claims 1-13.

15. A vehicle (1) comprising a battery system (2) according to any of claims 1-13 or a battery cell (20, 30, 40) according to claim 14.
